# EUROPEAN PATENT APPLICATION

(11) **EP 4 084 310 A1**
(43) Date of publication of application: **02.11.2022**
(21) Application number: 21171458.9
(22) Date of filing: 30.04.2021
(51) Int. Cl.: H02M 1/36, H02M 7/483

(54) **SYSTEM WITH AN ELECTRICAL CONVERTER, AN ELECTRICAL SUPPLY UNIT AND A CONTROL UNIT**

(71) Applicant: Maschinenfabrik Reinhausen GmbH, 93059 Regensburg (DE)
(72) Inventor: Colak, Ilknur, 93059 Regensburg (DE)

(57) **Abstract**

The invention relates to a system (2) comprising an electrical converter (4), an electrical supply unit (6) and a control unit (8), wherein the system (2) is configured to charge the cell capacitors (36) of the converter (4) in two subsequent charge phases.

## Description

The invention relates to a system with an electrical converter, an electrical supply unit and a control unit.

The electrical converter of the system can be used in high voltage DC application. Pre-charging the converter with a predefined voltage limits the inrush current into the converter during the power up procedure of the converter and thus during the power up procedure of the system. In particular, an inrush current into capacitive components of the converter is a major concern in terms of a power up stress to the capacitive components. The capacitor charging starts with inrush current and ends with an exponential decay down the steady-state charge of the capacitor components of the converter. When the magnitude of the inrush current peak is very large, a large stress to the capacitor components as well as a large stress to the electrical supplier unit, which provides the inrush current, is to be expected.

Against this background it is an object of the present invention to suggest a system comprising an electrical converter, an electrical supply unit and a control unit, wherein the system shall be configured to cause less stress to the capacitor components of the converter and/or less stress to the electrical supply unit during the power up procedure of the converter of the system.

The object of the present invention is solved by a system according to claim 1. The system comprises an electrical converter, and electrical supply unit and a control unit. The converter is coupled to the supply unit and comprises a converter arm and converter input terminals, which are directly or indirectly connected to the converter arm. The converter arm comprises a first arm node, a second arm node and a plurality of cell units connected in series between the first and second arm nodes. Each cell unit comprises a first cell node, a second cell node, a bypass unit configured to bypass the cell unit by interconnecting the cell nodes, at least one cell arm and a cell capacitor connected in parallel to the at least one cell arm, wherein each cell arm comprises at least two semiconductor switches connected in series. The control unit is configured to control the supply unit and/or the converter during a first charge phase, such that the following steps a) and b) are performed:
a) Generating a first charge voltage via the supply unit, and
b) Electrically connecting the converter arm to the supply unit, such that the first charge voltage is applied between the first and second arm nodes resulting in a pre-charge of all cell capacitors of the converter arm to a first pre-charged level.

Further, the control unit is configured to control the supply unit and/or the converter during a subsequent, second charge phase, such that the following steps c) to f) are performed:
c) Generating a second charge voltage via the supply unit,
d) Bypassing at least one of the cell units of the converter arm, such that the remaining cell units, which are not bypassed, are connected in series between the first and second nodes of the converter arm, and
e) Electrically connecting the converter arm to the supply unit during step d), such that the second charge voltage is applied between the first and second arm nodes resulting in a further pre-charge of the cell capacitors of the remaining cell units to a second pre-charged level, and
f) Repeating steps d) and e) groupwise, such that other cell units of the converter arm are bypassed in each step d).

Before advantageous features and possible embodiments of the converter are discussed, advantages of the converter will be explained in the following.

The configuration of the control unit allows to charge the cell capacitors of the converter in two different phases, namely the first charge phase and the second charge phase. In the first charge phase, the configuration of the control unit allows to control the supply unit and the converter, such that the cell capacitors of the converter are pre-charged to a first pre-charged level. The first pre-charged level may be sufficient for a minimum operation of the semiconductor switches of the converter. Therefore, the first pre-charged level may be considered as a minimum voltage for each cell unit for performing a minimum operation of the converter. This first pre-charged level may be reached without significant stress to the cell capacitors of the converter and/or without significant stress to the electrical supply unit. In the second charge phase, two or more cell units are bypassed, such that the at least two remaining cell units of a converter arm of the converter are each charged to a second pre-charged level. The second pre-charged level may allow to fully operate the respective cell units of the converter. Repeating the charging step of charging the cell capacitors groupwise to the second pre-charged level preferably results in a converter with a plurality of fully operatable cell units. It is to be noted that charging the cell capacitors of the cell units to the second pre-charged level does not result in a significant stress to the cell capacitors and also does not result in a significant stress to the electrical supply unit, since not all the cell capacitors are charged to the second charge level at the same time, but subsequently in smaller groups of cell capacitors.

The electrical converter may preferably be formed by an electrical voltage converter. For instance, the electrical converter may be a DC voltage to DC voltage converter or a DC voltage to AC voltage converter or an AC voltage to DC voltage converter. If the converter is configured to convert AC to DC or DC to AC, the converter may be called an inverter. In another embodiment, the electrical inverter may be configured as an electrical power converter.

In an embodiment, the electrical converter may be a modular multilevel converter (MMC). The MMC is a configured as a power converter to realize high voltage direct current conversion for the use of power transmission. The electrical converter may also be used in a medium voltage drive application or in a power distribution application.

The electrical converter may be referred to as the converter. The converter comprises a converter arm. The converter arm comprises a first arm node, a second arm node and a plurality of cell units connected in series between the first arm node and the second node. It is to be noted that the converter may comprise at least one converter arm. Therefore, the converter may comprise more than one single converter arm, but instead may comprise a plurality of converter arms. Each converter arm may be configured according to the converter arm described before. When explaining features, technical effects and/or advantages in connection with the converter in the following, these features, technical effects and/or advantages may apply to each of the converter arms.

The first arm node and the second arm node of the converter arm may be understood as internal nodes of the converter. Thus, these nodes may not be nodes in the meaning of terminals, where the converter can be externally connected to other devices.

The converter comprises input terminals, in particular two or three input terminals. The input terminals of the converter are directly or indirectly connected to the converter arm preferably resulting in a direct or indirect electrical connection between the input terminals of the converter and the converter arm nodes. For instance, a first input terminal of the converter may be directly and electrically connected to a first arm node of the converter arm. A second input terminal of the converter may be indirectly and electrically connected to a second arm node of the converter arm. The indirect electrical connection may be caused by electrical components interconnected between the second input terminal of the converter and the second node of the converter arm. Other configurations, which course a direct or indirect electrical connection between the input terminals and the arm nodes of the converter arm are also possible and covered by the invention.

The system comprises an electrical supply unit. The electrical supply unit may be referred to as a supply unit. The supply unit is preferably configured to supply electrical power, in particular an electrical voltage, which may also be referred to the supply voltage. The supply unit is coupled to the converter. For instance, output terminals of the supply unit may be directly or indirectly electrically connected to the input terminals of the converter. The supply unit may comprise internal switches to electrically connect or disconnect the supply unit to the converter and/or its converter arm. The supply unit may also be configured to apply a voltage across the input terminals of the converter. This applied voltage may result in a charge procedure of cell capacitors of the converter. The supply unit may comprise a transformer configured to supply a predefined voltage to the output terminals of the supply unit. Consequently, the supply unit may apply the predefined voltage across the input terminals of the converter.

According to an preferred embodiment, the converter arm may comprise at least five cell units, wherein these cell units are connected in series, such that the respective series connection of cell units is connected between the first arm node of the converter arm and the second arm node of the converter arm. The number of cell units per converter arm may be much larger than five.

Each cell unit of the converter arm may also be referred to as cell of the converter arm or as a cell. Further, each cell unit comprises a first cell node, a second cell node, a bypass unit, at least one cell arm and a cell capacitor. The bypass unit of the respective cell unit is configured to bypass the cell unit by interconnecting the first cell node of the respective cell unit and the second cell node of the respective cell unit. The interconnection may be referred to as an electrical interconnection, in particular as a switchable interconnection between the first and second cell nodes of the respective cell unit. Each cell arm of a cell unit comprises at least two semiconductor switches. The semiconductor switches of each cell arm are connected in series. For instance, if a cell unit comprises a single cell arm, which comprises a two semiconductor switches, these semiconductor switches may be connected in series to form the single cell arm of the cell unit. Preferably, the second cell node of the cell unit is directly and electrically connected to one end of the cell arm and/or to one end of one of the semiconductor switches of the cell arm. Further preferably, the first cell node maybe connected to a node between two semiconductor switches of the cell arm. However, each cell unit may comprise more than one cell arm. For instance, each cell unit may comprise a plurality of cell arms. The cell arms of a respective cell unit maybe connected in parallel. As explained before, each cell arm comprises at least two semiconductor switches connected in the series, preferably to form the respective cell arm.

The least one cell arm of a respective cell unit may form a half bridge or a full bridge. The cell capacitor of the cell unit is connected in parallel to the at least one cell arm of the cell unit. For instance, the cell capacitor of the cell unit may be connected in parallel to a single cell arm of the cell unit. But if the cell unit comprises a parallel arrangement of a plurality of cell arms, the cell capacitor of the respective cell unit may also be connected in parallel to the plurality of cell arms. Whenever reference is made to a connection in this description, it is preferably meant to be an electrical connection. Resulting from the parallel connection of the cell capacitor of the cell unit to the at least one cell arm of the cell unit, the electrical charge of the cell capacitor resulting from a pre-charge to the first level may be sufficient in order to drive the semiconductor switches of the at least one cell arm.

The input terminals of the converter are preferably configured to be connected to system input terminals, which are configured to be connected to a supply grid. The supply grid may be referred to or formed as a commercial grid or a main grid. Before the first charge phase starts, the input terminals of the converter are preferably electrically disconnected from the supply grid. For instance, the input terminals of the converter may be electrically disconnected from the system input terminals. As a result, the cell capacitors of the converter may be discharged, at least over the time. Before connecting or reconnecting the input terminals of the converter to the system input terminals of the system, such that the converter is electrically re-connected to the supply grid, it has been found of particular advantage, if the cell capacitors of the converter are charged in two phases in advance, namely during the first charge phase to a first pre-charged level and during the subsequent, second charge phase to a second pre-charged level. Preferably, the second pre-charged level is higher than the first pre-charged level. As a technical effect, the electrical stress to the cell capacitors and/or the supply unit is limited. The first charge phase and the second charge phase will be discussed in further detail in the following.

The control unit of the system is configured to control the supply unit during the first charge phase in the step a) to generate a first charge voltage. This first charge voltage is preferably provided at the output terminals of the supply unit. The input terminals of the converter are connected to the output terminals of the supply unit. The connection between the input terminals of the converter and the output terminals of the supply unit may comprise switches, such that the connection between the output terminals of the supply unit and the input terminals of the converter can be electrically connected and electrically disconnected, depending on whether the switches are in an open state or closed state. However, the converter remains generally coupled in both cases to the supply unit. As a result, both, the converter and the supply unit are encompassed by the system of the present invention. The supply unit may be supplied with electrical power from the supply grid, from the commercial grid or the main grid. Furthermore, the supply unit may be mechanically coupled to the converter.

The supply unit may be configured to be controlled by the control unit. For instance, the supply unit may comprise controllable switches, which are configured to electrically connect or electrically disconnect the output terminals of the supply unit from the remaining circuit of the supply unit. The controllable switches of the supply unit may be controlled by the control unit to generate the first charge voltage during the first charge phase at the output terminals of the supply unit and/or to generate a second charge voltage during the second charge phase at the output terminals of the supply unit.

Furthermore, the control unit is configured to control the supply unit, the converter, or both during the first charge phase in step b) during the first charge phase to electrically connect the converter arm of the converter to the supply unit, such that the first charge voltage generated in step a) is applied between the first arm node and the second arm node of the converter arm resulting in a pre-charge of all cell capacitors of the converter arm at the same time to a first pre-charged level. During the step b), the control unit may also be configured to control the remaining converter circuit, such that the first charge voltage applied between the input terminals of the converter is transferred and also applied between the first arm node and the second arm node of the converter arm. For instance, the converter circuit may comprise controllable switches which can be controlled by the control unit, such that the input terminals are directly and electrically connected to the first and second arm nodes of the converter arm.

In case the converter comprises more than one converter arm, step b) may be repeated for each of the converter arms. In each repetition cycle, all cell capacitors of the respective converter arm are charged to the first pre-charged level, when the first charge voltage is applied between the first and second arm nodes of the respective converter arm. In particular, the first charge voltage may be equally divided between the cell capacitors of the converter arm. The corresponding, divided part of the first charge voltage may form the first pre-charged level.

In an alternative embodiment, if the converter comprises a plurality of converter arms, at least two groups of converter arms may be formed, where each group comprises at least two converter arms connected in series. When applying the first charge voltage of the supply unit between the input terminals of the converter, the first charge voltage of step a) maybe applied across the series connection of the converter arms of a corresponding group. As a result, all cell capacitors of these converter arms are charged to the first pre-charged level. In particular, the first charge voltage may be equally divided between the cell capacitors of the converter arms of the corresponding group. The corresponding, divided part of the first charge voltage may form the first pre-charged level.

The first charge voltage may be predefined, such that a cell voltage across the pre-charged cell capacitor is high enough to set the semiconductor switches of the corresponding cell unit and/or the bypass unit of the corresponding cell unit into a controllable state. Since all cell capacitors of the cell units of the converter arm are charged to the first pre-charged level during the first of charge phase, each of the semiconductor switches of the cell units of the converter arm is in a controllable state and/or each bypass unit of the cell units of the converter arm is in a controllable state.

The control unit may be configured to control directly or indirectly each of the semiconductor switches of the cell units of the converter arm and/or each of the bypass units of the cell units of the converter arm. For instance, the control unit may be configured to individually control the state of each of the bypass units. Each bypass unit may be controlled by the control unit to change its state between a closed state and an open state. In a closed state, the bypass unit electrically connects the first cell node with the second cell node of the cell unit, which comprises the respective bypass unit. As a result, a cell unit maybe bypassed. In an open state, a bypass unit of a cell unit does not electrically connect the first cell node with the second certain node of the cell unit.

Each cell unit may comprise its own cell controller, wherein the cell controller is integrated into the respective cell unit. For instance, the cell controller, the semiconductor switches and the cell capacitor of the same cell unit may be integrated on the same integrated circuit of this cell unit. In other words, each cell unit may comprise an integrated circuit, where the cell controller, the cell capacitor and the semiconductor switches of the respective cell unit are integrated. The cell controller of a cell unit may be configured to control the switching states of the semiconductor switches of the respective cell unit. The cell controller of a cell unit may require the cell capacitor of this cell unit to be charged to the first pre-charged level, which preferably results in a first pre-charge voltage supplied by the cell capacitor to the cell controller of this cell unit. The cell control of the cell unit is therefore able to control the switching states of the semiconductor switches of the respective cell unit. As a converter arm comprises a plurality of cell units, the converter arm may therefore also comprise a plurality of cell controllers, which are individually integrated in the respective cell units. Each of the cell controllers may form a part of the control unit of the system of the present invention. For instance, each of the cell controllers may form a slave controller part of the control unit. The control unit may further comprise a master controller part, which is configured to control each of the slave controller parts. Each of the slave controller parts may be connected by signal connections lines to the master controller part. By means of the signal connection lines, the master controller part may be configured to send control signals to the slave controller parts. Each of the slave controller parts maybe configured to control the semiconductor switches of its cell unit based on the received control signal. Furthermore, each of the slave controller parts maybe configured to control the bypass unit of its cell unit based on the received control signal.

A cell unit may be understood to be activated if the cell capacitor of the cell unit is pre-charged to the first pre-charged level. This can be reached during the first charge phase. An activated cell unit may therefore be in a state to be actively controlled via the control unit. A cell unit may be understood to be deactivated, if the cell capacitor of the cell unit is discharged, such that a voltage provided by cell capacitor of this cell unit is not high enough to run the cell controller of this cell unit. This may be the case, if the charge of the cell capacitor of the cell unit is less than the first pre-charged level.

As explained above, the first pre-charged level at the cell capacitors of the cell arm may be sufficient for the operation of the semiconductor switches and the bypass units of the converter arm. Therefore, the first pre-charged level may be considered as a minimum voltage for performing a minimum operation of the converter. This first pre-charged level may be reached without significant stress to the cell capacitors of the converter and/or without significant stress to the electrical supply unit. In the subsequent, second charge phase, at least two or more cell units are bypassed, such that the at least two remaining cell units of the converter arm of the converter are each charged to a second pre-charged level. Once a cell capacitor of a cell unit is charged up to the second pre-charged level, the corresponding cell unit may than be fully operatable. As it will become apparent from the following explanations in further detail, not all cell capacitors of the cell units of a converter arm are charged to the second pre-charged level at the same time, but instead, a limited number of cell capacitors, in particular at least two, three or four cell capacitor or even a larger number of capacitors are each charged to the second pre-charged level at the same time. But the number of cell capacitors to be charged to the second pre-charged level at the same time is preferably limited to 20%, 30% or 40% of the total number of cell capacitors of the converter arm. Compared to the theoretical possibility, to charge all cell capacitors with the grid voltage of the supply grid, the stress applied to the charged cell capacitors and/or the supply unit using the approach according to the present invention is limited during the second charge phase.

The control unit is configured to control the supply unit and/or the converter during the second charge phase to perform steps c), d), e) and f), which are defined in claim 1. When considering the same converter arm for both phases, it is preferred that the second charge phase starts after the first charge phase finished. For instance, the second charge phase may directly start after the first charge phase finished. However, a time break may be set between the finish of the first charge phase and the start of the second charge phase. This time break is preferably less than 20 seconds.

In the first step c) of the second charge phase, a second charge voltage is generated via the supply unit. Preferably, the first charge voltage and the second charge voltage are equal or the same. Therefore, the supply unit may generate in steps a) and c) the same voltage as the first charge voltage and the second charge voltage. However, it may also be possible, that the supply unit is configured to generate a second charge voltage in step c), which is a different from the first charge voltage in step a). For instance, the second charge of voltage may be higher or lower than the first charge voltage.

Preferably, steps d) and e) are groupwise repeated according to step f), until all cell capacitors of the cell units of a converter arm are charged to the second pre-charged level. Furthermore, the supply unit is preferably controlled by the control unit, such that the second charge voltage generated in step c) by the supply unit is supplied, preferably uninterrupted, during steps d) and e), and also during each repetition cycle of steps d) and e) according to step f).

In step d), the converter is preferably controlled by the control unit to bypass at least one of the cell units of the converter arm, such that the (at least two) remaining cells, which are not bypassed, are electrically connected in series between the first arm node and the second arm node of the respective converter arm. Preferably, the bypass units bypassed in (each) step d) are bypassed at the same time, thus without delay.

Step d) results in the technical effect that the second charge voltage generated by the supply unit can be applied between the first and second arm nodes of the converter arm resulting in the application of the second charge voltage across the at least two cell unit of the converter arm, which are not bypassed. As a further technical effect, only the cell capacitors of these cell units, which are not bypassed, are charged by means of the supply unit.

Against this background, the control unit is preferably configured to control the supply unit and the converter in step e) to electrically connect the converter arm to the supply unit during step d), such that the second charge voltage is applied between the first and second arm nodes of the converter arm resulting in a further pre-charge of the cell capacitors of the remaining cell units to a second pre-charged level. The integrated sub-step "electrically connecting the converter arm to the supply unit" in step e) may be performed by bypassing the at least one of the cell unit of the converter arm as required by step d). Accordingly, steps d) and e) may be considered as a single step or a single group.

The second pre-charged level of the cell capacitors results compared to the first charge level in a higher electrical charge stored by each respective remaining cell capacitor. As a result, each cell capacitor charged to the second pre-charged level provides a higher voltage to its cell unit, which allows to a fully operate the corresponding cell unit. Since the second charge voltage supplied by the supply unit is not applied to all cell capacitors of a converter arm at the same time, the electrical stress applied to the supply unit is limited.

According to step f), steps d) and e) are repeated groupwise. Step e) refers to the electrical connection during step d), such that steps d) and e) are preferably considered to form a group of steps. This group of steps is repeated according to step f). Step f) also requires that other cells of the converter arm are bypassed during each repetition cycle of the group of steps d) and e), here in the respective step d). The term "other cell units" maybe understood as to refer to the at least two cell units of the converter arm, whose capacitors are not (yet) further pre-charged to the second pre-charged level. The number of cell units, whose cell capacitors are not charged to the second pre-charged level, reduces with each repetition according to step f). Accordingly, once each of the cell capacitors of the cell units of a converter arm are charged to the second pre-charged level, step f) in the second charge phase is skipped and the second charge phase may be terminated.

The converter of the system comprising the at least one converter arm, whose cell capacitors of the corresponding cell units are charged each to the second pre-charged level, is therefore in a condition to be used as desired, for instance to convert an input voltage to a desired output voltage. With regard to the configuration and/or use case of the converter, reference is made to the introduction of this patent application.

The electrical connection according to steps b) and f) could generally be provided and/or supported by controlling switches of both, the supply unit and the converter. Further, each of the first and second charge voltage may be predefined.

According to a preferred embodiment of the system, the control unit is configured to control the supply unit and the converter during the second charge phase for performing steps d) to f) until each of the cell capacitors of the cell units of the converter arm is pre-charged to the second pre-charged level. As a technical effect, each of the cell units is fully operatable and fully controllable. The control unit may also be configured to control the supply unit and the converter to electrically disconnect the supply unit from the converter. Thereafter, the input terminals of the converter can be electrically connected to a supply grid for the desired use of the converter.

According to a preferred embodiment of the system, the control unit is configured to control the supply unit and the converter to disconnect the supply unit from the converter, once and/or after all cell capacitors of the cell units of the converter arm are pre-charged to the second pre-charged level. The resulting disconnection may be limited to an electrical disconnection. The disconnection prevents a conflict between the voltage provided by the supply unit and the voltage supplied by the supply grid.

According to a preferred embodiment of the system, the supply unit comprises source input terminals, source output terminals, charging resistors and source switches, wherein an output at the source output terminals is controllable via the switches, and wherein the source output terminals are connected to the converter input terminals. The source input terminals are preferably configured to be connected to a power supply, different from the supply grid, which is connected to the converter terminals. The output at the source output terminals preferably refers to the voltage output at said terminals.

System according to one of the preceding claims, wherein the supply unit is configured to be controlled by the control unit. The control unit is not a part of a possible control system of the supply grid, which may also be referred to as the commercial grid. The control unit may be a part of the system only, but not of the supply grid. The supply unit and the control unit may be connected via a signal control lines, which may be used to send control signals from the control unit to the supply unit.

According to a preferred embodiment of the system, the control unit is configured to control the supply unit during step b) to output the first charge voltage at the source output terminals, and wherein the control unit is configured to control the supply unit during step e) to output the second charge voltage at the source output terminals. During the remaining time, the control unit may be configured to control the supply unit to electrically disconnect the source output terminals at least from the source input terminals. This may prevent an undesired charge of any cell capacitors of the converter and/or other undesired electrical stress to the converter.

According to a preferred embodiment of the system, the control unit is configured to control the bypass units of the cell units during step d), such that the semiconductor switches of the bypass units from between 10% and 50% of all cell units as remaining cell units are opened with a time delay so that the charging periods of the cell capacitors of the remaining cell units overlap. The overlapping charging periods of the cell capacitors result from the delayed opening of the semiconductor switches of the bypass units. This allows a decreased charging current while keeping the total charging time for all cell capacitors as short as possible.

According to a preferred embodiment of the system, the converter is configured to be connected to a supply grid, which provides a grid voltage, wherein the first and/or second charge voltage is smaller than the grid voltage. The supply grid may also be referred to as the main grid. As an effect, the complexity and performance of the supply unit can be as small as possible. The grid voltage is preferably between 5 KV and 200 KV. Each of the first and second charge voltages may be between 2 KV to 80 KV.

According to a preferred embodiment of the system, the first and/or second charge voltage is smaller than 50%, 30% or 20% of the grid voltage. Furthermore, each of the first and second charge voltages may be between 10% and 50% of the grid voltage. As an effect, the stress applied to converter and/or the supply unit during the charge the cell capacitors is limited. According to a preferred embodiment of the system, the system comprises system switches being configured to disconnect the converter from the supply grid or to connect the converter to the supply gird, wherein the control unit is configured to control the system switches to disconnect the converter from the supply grid before a start of the first charge phase and/or before the supply unit is electrically connected to the converter. The disconnection of the converter from the supply grid preferably relates into an electrical disconnection. Thus, the system switches may just be turned into an open state to prevent an electrical current running through the system switches. Further, controlling the system switches to (electrically) disconnect the converter from the supply grid before the first charge phase prevents an undesired current between the supply grid and the output terminals of the supply unit of the system.

According to a preferred embodiment of the system, the control unit is configured to control the system switches to connect the converter to the supply grid after the second charge phase and/or after the supply unit is electrically disconnected from the converter. The connection may relate to an electrical connection. The supply unit may be electrically disconnected from the converter, when the source switches of the supply unit are in an open state, such that the source switches prevent an undesired current between the output terminals of the supply unit and the supply grid.

According to a preferred embodiment of the system, the control unit is configured to control the system switches, such that the converter is connected to the supply grid even if the grid voltage of the supply grid is less than 0.01% of a predefined nominal grid voltage of the supply grid.

According to a preferred embodiment of the system, each semiconductor switch of the cell units is to be supplied with a predetermined switch voltage to be set to a switchable state, and wherein the first charge voltage is between one and two times of the minimum voltage determined by twice the product of the single switch voltage and the number of cell units of the converter arm. Each semiconductor switch of a cell unit may require the predetermined switch voltage (in particular to be applied between collector and emitter of the respective semiconductor switch), such that the semiconductor switch can be controlled via its gate by means of the control unit. Since each cell unit comprises at least one cell arm, which comprises at least two semiconductor switches in series, each cell unit may require at least twice of the switch voltage for operation. Further, the converter comprises a plurality of cell units connected in series, such that the first charge voltage may be at least twice the product of the single switch voltage and the number of cell units.

According to a preferred embodiment of the system, the bypass unit of each cell comprises a semiconductor or electromechanical switch arranged between the first and second cell nodes of the respective cell unit, wherein the control unit is coupled to each bypass unit to control the switching states of the switches of the bypass units. Thus, the switch of the bypass unit maybe either a semiconductor switch or an electromechanical switch. The switch of the bypass unit is arranged between the first cell node and the second cell node of the cell unit, which comprises the respective bypass unit. As an effect, the control unit can selectively bypass at least one of the cell units in step d).

According to a preferred embodiment of the system, the system comprises a plurality of converter arms, which are connected directly or indirectly to the converter input terminals, wherein the control unit is configured to control the supply unit and the converter during the first phase to perform the steps a) and b) for each of the converter arms and to control the supply unit and the converter during the second charge phase to perform the steps c) to f) for each of the converter arms.

According to a preferred embodiment of the system, each cell unit comprises a half- or full bridge, preferably formed by the at least one cell arm of the respective cell unit.

According to a preferred embodiment of the system, the converter is configured as an AC to DC inverter, as an DC to AC inverter, as an AC to AC Converter or as a converter for reactive power compensation.

According to a preferred embodiment of the system, the converter comprises three converter arms, which are connected in a star configuration, a delta configuration or a double-star configuration. All features, preferred embodiments, technical effects and/or advantages previously explained in connection with the converter arm of the converter apply to each of the three converter arms of the preferred embodiment of the system. One of these three converter arms may be formed by the converter arm already discussed before. The first charge phase may be carried out in parallel for all three converter arms. The same holds for the second charge phase. But it may also be possible, that the first and second charge phase may be carried out for each converter arm one after the other. The control unit may be configured to control the converter and the supply unit for each of the two alternative or just for one of the alternatives.

According to a preferred embodiment of the system, the second charge voltage is higher than the first charge voltage.

According to a preferred embodiment of the system, the second charge voltage is between 80% and 120% of the first charge voltage.

According to a preferred embodiment of the system, the control unit is configured to control the converter during step d), such that a plurality of the cell units of the converter arm is bypassed resulting in at most 10% to 50% of all cell units as remaining cells, which are not bypassed, wherein the bypassed cell units and the remaining cell units are connected in series during step d) between the first and second arm nodes of the converter arm, such that the second charge voltage is applied to the cell capacitors of the remaining cell units resulting in a charging of the cell capacitors of the remaining cell units. The number of the remaining cell units is an integer number of at least two. As a result, at least two cell capacitors are charged in each step e).

Further features, advantages and application possibilities of the present invention may be derived from the following description of exemplary embodiments and/or the figures. Thereby, all described and/or visually depicted features for themselves and/or in any combination may form an advantageous subject matter and/or features of the present invention independent of the combination in the individual claims or the dependencies. Furthermore, in the figures, same reference signs may indicate same or similar objects.
- Fig. 1: schematically illustrates a first embodiment of the system.
- Fig. 2: schematically illustrates a first embodiment of a cell unit.
- Fig. 3: schematically illustrates a second embodiment of a cell unit.
- Fig. 4 and 5: schematically illustrates embodiments of the converter.

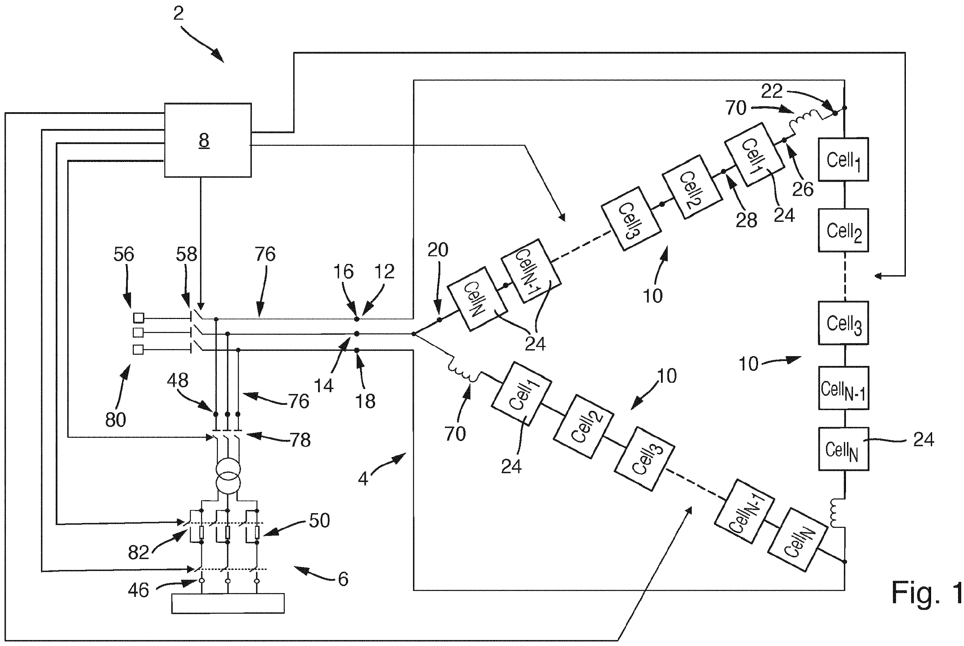

Figure 1 schematically illustrates a first embodiment of a system 2. The system 2 comprises an electrical converter 4, an electrical supply unit 6 and a control unit 8. The electrical converter 4 may also be referred to as the converter 4. The electrical supply unit 6 may also be referred to as the supply unit 6. The control unit 8 is preferably configured to electrically control the converter 4 and the supply unit 6. Therefore, the control unit 8 may be configured or refer to as an electrical control unit 8.

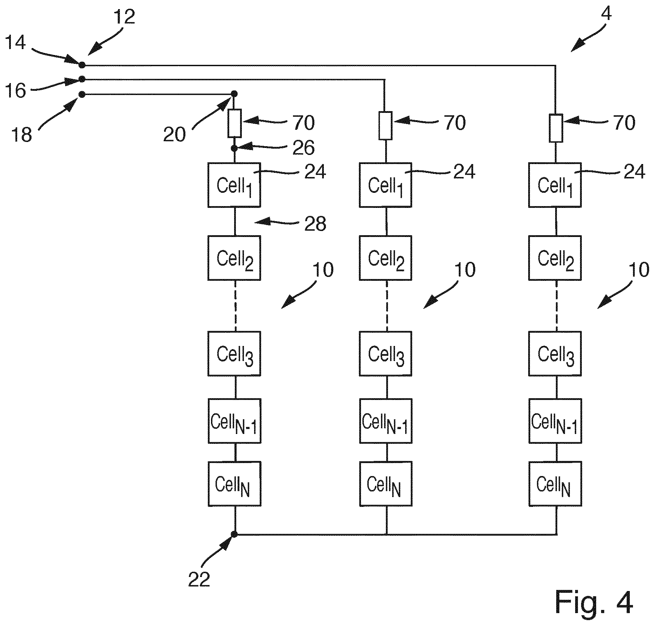

The converter 4 may be configured for reducing the reactive power in an electrical network, such as the supply grid 56. Such a converter 4 is schematically illustrated in figure 1. Another example of such a converter 4 is schematically illustrated in figure 4.

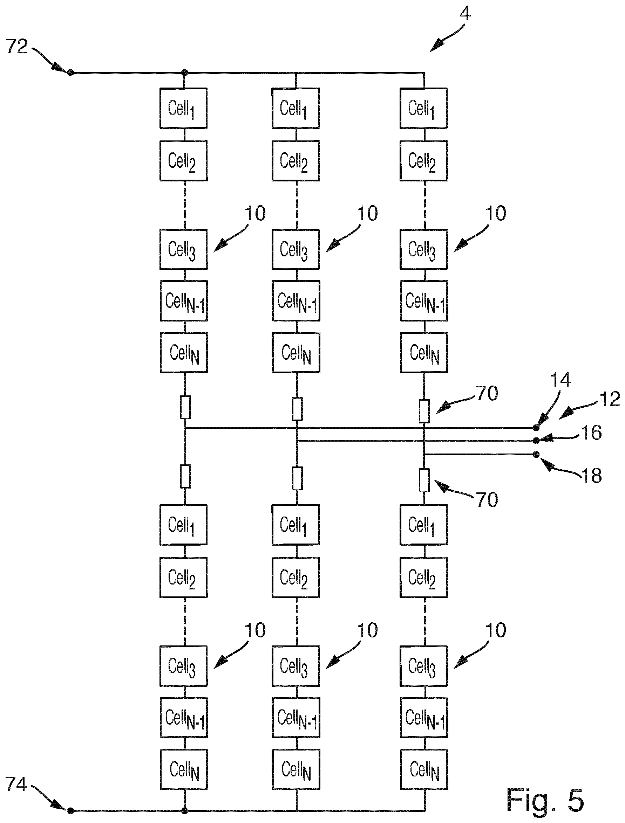

In another embodiment, the converter 4 may be configured for transforming an input voltage into another output voltage. Therefore, the converter 4 may be configured as an inverter. A converter 4 designed as an inverter is schematically illustrated in figure 5.

As can be derived from figures 1, 4 and 5 the topology of the converter 4 may depend on the application of the converter 4. However, the converter 4 may be designed in one of the following typologies: double star configuration, a single star configuration or delta configuration.

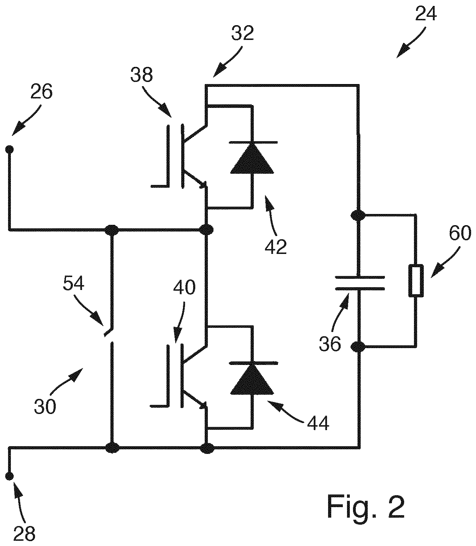

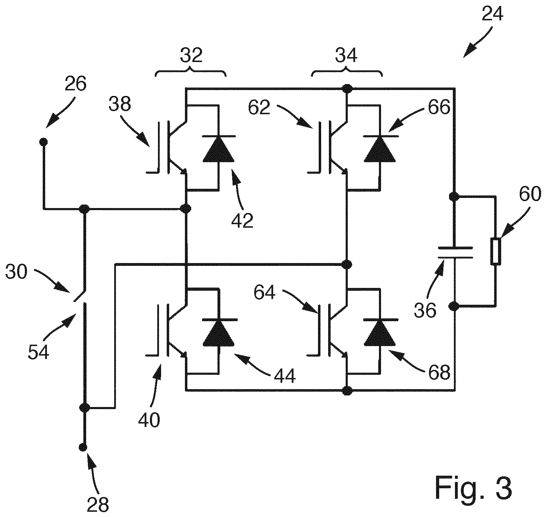

Generally, the converter 4 comprises at least one converter arm 10, wherein the converter arm 10 comprises a plurality of cell units 24. Each cell unit 24 comprises a cell capacitor 36, as it can be derived for example from figures 2 and 3, where different embodiments of the cell unit 24 schematically illustrated.

The operation of the converter 4 often depends on the energy stored in the cell capacitors 36. Before achieving a desired operation in connection with a supply grid 56, each of the cell capacitors 36 often need to be charged to a certain level to avoid a high and often unsafe start up inrush currents into the converter 4. This certain level is preferably achieved by cell capacitors charged to the second pre-charged level.

The general idea behind the patent application is to charge the cell capacitors 36 in a first charge phase via the supply unit 52 a first charge level that this enough to actively control the cell units 24. As a result, the cell units 24 can be individually controlled by the control unit 8. In particular, each of the cell unit 24 can be individually bypassed via the control unit 8. This makes it possible in a subsequent, second charge phase to further charge the cell capacitors 36 in smaller groups. In other words, the cell capacitors 36 are further charged during the second charge phase while actively controlled by the control unit 8. Before discussing the procedure of charging the cell capacitors 36 in further detail, the preferred embodiment of the system 2 shown in figure 1 is discussed in the following.

The converter 4 of the preferred embodiment of the system 2 shown in figure 1 is coupled to the supply unit 6. As can be derived from figure 1, the converter 4 comprises input terminals 14, 16 and 18. These input terminals 14, 16, 18 may also refer to the reference sign 12. The input terminals 12 are directly connected via connection lines 76 to the source input terminals of 48 of the supply unit 6. This connection ensures that the converter 4 is coupled to the supply unit 6. It is to be noted, however, that further switches (not shown in figure 1) may be integrated into the connection lines 76. These further switches may be used to electrically connect or disconnect the converter 4 from other input terminals 48 of the supply unit 6. Even though of these further switches may electrically disconnect the converter 4 from the supply unit 6, the converter 4 remains to be coupled to the supply unit 6.

The converter 4 comprises at least one converter arm 10. As a can be derived from figure 1, the converter 4 may comprise three converter arms 10 or even a larger number of converter arms 10. For the sake of simplicity, only one of these the converter arms 10 is further discussed in the following. However, preferred features, technical effects and/or advantages explained in connection with this converter arm 10 apply in an analogous manner for each of the converter arms 10.

The converter arm 10 comprises a first arm node 20, a second arm node 22 and a plurality of cell units 24. The cell units 24 are connected in series between the first arm node 20 and the second arm node 22. This series connection may also comprise further elements also being connected in series with the cell units 24 between the arm nodes 20, 22. For example, the converter arm 10 may also comprise an arm resistor 7, which is connected in series with the cell units 24 of the converter arm 10, such that the resulting series connection extends from the first arm node 22 and the second arm node 22.

Preferably, each of the cell units 24 of the cell arm 10 have the same configuration, topology and/or design. Therefore, when explaining preferred embodiments of a cell unit 24 in the following, these explanations apply in an analogous manner for each of the cell units 24.

An example of a cell unit 24 is schematically illustrated in figure 2. The cell unit 24 comprises a first cell node 26, a second cell node 28, a bypass unit 30, a cell arm 32 and a cell capacitor 36.

The bypass unit 30 is configured to bypass the cell unit 24 by interconnecting the first cell node 26 and the second cell node 28. In an example, the bypass unit 30 may comprise a semiconductor switch 54. If the semiconductor switch 54 is in a closed state, the semiconductor switch 54 will electrically interconnected the first and second arm nodes 26, 28 resulting in a shortcut between these two nodes 26, 28 and further resulting in bypassing the cell unit 24. If the cell unit 24 is bypassed in the converter arm 10, no electrical voltage is dropped across this bypassed cell unit 24 if a (another) voltage is applied between the first arm node 20 and second arm node 22. If the semiconductor switch 54 is in an open state, the semiconductor switch 54 will not electrically interconnect the first and second arm nodes 26, 28 and a voltage (part) will drop across the first and second arm nodes 26, 28.

The cell unit 24 illustrated in figure 2 comprises a single cell arm 32. The cell arm 32 comprises a first semiconductor switch 38 and a second semiconductor switch 40, wherein these semiconductor switches 38, 40 are connected in series. A first diode 42 is a connected in parallel to the first semiconductor switch 38. A second diode 44 is connected in parallel to the second semiconductor switch 40. Preferably, the converter arm 32 is formed by the first and second semiconductor switches 38, 40 and the first and second diodes 42, 44. Each of the semiconductor switches 38, 40 may be formed as a bipolar transistor, a MOSFET transistor, an insulated gate bipolar transistor (IGBT) or any other suitable structure and/or topology of a semiconductor switch. In the example illustrated in figure 2, both, the first and second cell nodes 26, 28 are directly connected to the single cell arm 32 of the cell unit 24. In this example, the cell unit 24 represents an embodiment of a half bridge configuration.

The cell unit 24 of figure 2 further comprises an electrical capacitor 36, which may also be referred to as the cell capacitor 36. The cell capacitor 36 is connected in parallel to the converter arm 32. If the cell unit 24 is in a passive state and/are not actively controlled by the control unit 8, a voltage applied between the first and second cell nodes 26, 28 causes an electrical current running through the first diode 42 and the cell capacitor 36. As a result, the cell capacitor 36 is a charged. To prevent a (further) charging of the cell capacitor 36, the bypass semiconductor switch 54 of the bypass unit 30 may be turned into the closed state. Preferably, the cell unit 24 also comprises an electrical resistor 60, which may also be referred to as the cell resistor 60. The cell resistor 60 may limit the inrush current into the cell unit 24.

Another example of a cell unit 24 is schematically illustrated in figure 3. In principle, this cell unit 24 corresponds to the cell unit 24 previously explained in connection with figure 2, such that all explanations, preferred features, technical effects and/or advantages explained in connection with the cell units 24 of figure 2 apply in an analogous manner for the cell unit 24 schematically illustrated in figure 3. The cell unit 24 shown in figure 3, however, comprises two converter arms 32, 34, which connected in parallel. Each of the converter arms 32, 34 are in a principal designed as explained before in connection with the figure 2. Thus, the first converter arm 32 of the cell unit 24 of figure 3 may be formed by the previously explained single converter arm 32 shown in figure 2. The second converter arm 34 of the cell unit 24 shown in figure 3 may comprise a first semiconductor switch 62 and a second semiconductor switches 64, which are connected in series. A first diode 66 maybe connected in parallel to the first semiconductor switch 62. A second diode 68 may be connected in parallel to the second semiconductor switch 64. The cell capacitor 36 is connected in parallel to both cell arms 32, 34. It is to be noted, that the first and second cell nodes 26, 28 are not directly connected to the first cell arm 32 only, but instead, the first cell node 26 is directly connected to the first cell arm 32 between its semiconductor switches 38, 40 and the second cell node 28 is directly connected to the second cell arm 34 between its semiconductor switches 62, 64. If the cell unit 24 is in a passive state and/are not actively controlled by the control unit 8, a voltage applied between the first and second cell nodes 26, 28 causes an electrical current running through the first diode 42, the cell capacitor 36 and the second diode 68. As a result, the cell capacitor 36 is a charged. To prevent a (further) charging of the cell capacitor 36, the bypass semiconductor switch 54 of the bypass unit 30 may be turned into the closed state. In the example illustrated in figure 3, the cell unit 24 represents an embodiment of a full bridge configuration.

Turning back to figure 1, the converter 4 comprises three converter arms 10, wherein each of the converter arms comprises several cell units 24 connected in series. Each of these the cell units 24 may be formed by a cell unit 24 as explained in connection with figure 2 (half bridge configuration) or figure 3 (full bridge configuration). It is to be noted, however, that other configurations for the cell units 24 are also possible and that the cell units 24 are preferably not limited to the embodiments shown in figure 2 and 3.

For the sake of simplicity, the following explanations regarding the first charge phase and the second charge phase refer to a single converter arm 10 of the converter 4 only, however, the explanations apply for each of the converter arms 10 of the converter 4 in an analogous manner.

As schematically illustrated in figure 1, the first converter input terminals 14 of the converter 4 is electrically connected to the first arm node 20 of the converter arm 10 and the second input terminal 16 of the converter 4 is electrically connected to the second arm node 22 of the converter arm 10. Both input terminals 14, 16 electrically connected to source output terminals 48 of the supply unit 6. As a result, if a voltage is generated at the source output terminals 48 of the supply unit 6, this voltage is applied across the first and second arm nodes 20, 22 of the converter arm 10.

Before applying a voltage via the supply unit 52 to the converter 4, it is preferred to electrically disconnect the supply grid 56 from the converter 4 and only thereafter to electrically connect the supply unit 52 to the converter 4. The system 2 preferably comprises system switches 58, which are integrated into the part of connection line 76 extending between the system input terminals 80 of the system 2 and the converter input terminals 12. The system input terminals 80 are configured to be connected to the supply grid 56, which may be a commercial grid. The control unit 8 of the system 2 is configured to control the system switches of 58, in particular to turn of the system switches 58 from a closed state into an open state, or vice versa.

Furthermore, the supply unit 6 preferably comprises output switches 78, which are directly connected to the source output terminals 48 of the supply unit 6. The control unit 8 is preferably configured to control the output switches 78 of the supply unit 52 to turn the output switches 78 from an open state into a closed state, or vice versa. The supply unit 6 may comprise further switches 52 and 46 a, which may also be controlled by the control unit 8.

In order to apply a voltage generated by the supply unit 52 to the converter 4, the control unit 8 of the system 2 controls the system switches 58 to turn these system switches 58 into the open state, such that the supply grid 56 is electrically disconnected from the converter 4. Thereafter, the control unit 8 of the system 2 may control the output switches 78 of the supply unit 52 to turn the output switches 78 to the closed state, such that the supply unit 6 is electrically connected to the converter 4.

A principal idea on which the invention is based, is to charge the cell capacitors 36 of the cell units 24 of a cell arm 10 passively in a first charge phase and thereafter to charge the cell capacitors 36 actively in a second charge phase. In the first charge phase, all cell capacitors 36 of the cell arm 10 are charged at the same time to a first pre-charged level. The required first charge voltage is small compared to the grid voltage such that the stress applied to the supply unit and the converter is relatively small. Once all cell capacitors 36 are each charged to the first pre-charged level, this will allow to actively control the semiconductor switches of the cell units 24. Further, the actively controllable semiconductor switches of the cell unit 24 allow to bypass several cell units 24 of the cell arm 10, such that a voltage applied to the input terminals 14, 16 of the converter 4 apply only to the remaining cell units 24, which are not bypassed, resulting in a continued and parallel charging of the remaining cell units 24 (only) each to a second pre-charged level, which is higher than the first pre-charged level. The group of bypassed cell units 24 can be changed from load cycle to a load cycle, until all cell capacitors 36 are each charged to the second pre-charged level. As an advantage, the voltage applied to the input terminals 14, 16 of the converter 4 each load cycle can be much lower than a voltage, which would otherwise be needed to charge all cell capacitors 36 in parallel at the same time to the second pre-charged level. Against this background, the supply unit 6 must only be dimensioned for supplying a voltage to charge all cell capacitors 36 to the first pre-charged level and also be dimensioned for supplying thereafter the same voltage or another (relatively small) voltage to charge in each load cycle only the cell capacitors 36 of the respective group of remaining cell units 24, which are not bypassed in the respective load cycle. As a result, the dimension, the complexity and the price of this supply unit 6 can be small.

The first charge phase is discussed in further detail in the following. The control unit 8 is configured to control the supply unit 6 and the converter 4 during the first charge phase, such that the following steps a) and b) are performed.

In step a), the supply unit 6 is controlled by the control unit 8 to generate a first charge voltage. For this purpose, the control unit 8 may control the sources switches 52 and/or the output switches 78, such that these switches 52, 78 are turned into a closed state. The first charge voltage is preferably between 2 kV and 80 kV and is further preferably smaller than the grid voltage of the supply grid.

In step b), the supply unit 6 and/or the converter 4 is/are controlled by the control unit 8 to electrically connect the converter arm 10 of the converter 4 to the supply unit 6. For this purpose, the control unit 8 may control the output switches 78 of the supply unit 6 to turn the output switches 78 into a closed state or to remain the output switches 78 in the closed state, if these switches were closed before. Furthermore, the control unit 8 may directly or indirectly control the bypass unit 30 of each cell unit 24 of the converter arm 10 to turn all bypass units 30 into an open state or to remain all bypass units 30 in the open state. According to a preferred example, all bypass units 30 of the converter arm 10 are in the open state, unless they are actively controlled. In this example, only the supply unit 6 and the system switches 58 may be controlled in step b) to electrically connect the converter arm 10 to the supply unit 6. In any case, the first charge voltage generated in step a) remains present in step b), such that the first charge voltage is applied across the converter arm 10 and therefore between the first arm node 20 and the second arm node 22. The series connection of the cell units 24 of the converter arm 10 will act as a voltage divider in this situation. Consequently, all cell capacitors 36 of the cell units 24 of the cell arm 10 are each pre-charged at the same time to the first pre-charged level. The first pre-charged level may represent the voltage caused by the energy stored in the respective cell capacitor 36 after being charged in step b). For instance, if a number of N cell units 24 are connected in series between the first and second arm nodes 20, 22 of the converter arm 10, the first pre-charged level may represent the n-th part of the first charge voltage (first charge voltage divided by N). This is at least true, if the cell capacitors 36 are charged in step b) to a steady state. More generally, the first pre-charged level of a cell capacitor 36 may represent the electrical energy stored in the cell capacitor 36.

Each cell unit 24 of the converter arm 10 may comprise its own cell controller (not shown), wherein the cell controller is integrated into the respective cell unit 24. For instance, the cell controller, the semiconductor switches 54, 38, 40, 62, 64, the diodes 42, 44, 66, 68 and the cell capacitor 36 of the same cell unit 24 may be integrated on the same circuit board of the cell unit 24. In other words, each cell unit 24 may comprise a circuit board, where the cell controller, the cell capacitor 66 and the semiconductor switches 54, 38, 40, 62, 64 of the respective cell unit 24 are arranged.

The cell controller of a cell unit 24 may be configured to control the switching states of the semiconductor switches 54, 38, 40, 62, 64 of the respective cell unit 24. The cell controller of a cell unit 24 may require the cell capacitor 66 of this cell unit 24 to be charged to the first pre-charged level for being able to operate. This first pre-charged level may be understood as a first pre-charge voltage supplied by the cell capacitor 36 to the cell controller of this cell unit 24. As the converter arm 10 comprises a plurality of cell units 24, the converter arm 10 may therefore also comprise a plurality of cell controllers. Each of the cell controllers may form a part of the control unit 8 of the system 2. For instance, each of the cell controllers may form a slave controller part of the control unit 8. The control unit 8 may further comprise a master controller part, which is configured to control each of the slave controller parts. Each of the slave controller parts may be connected to the master controller part via signal connection lines. By means of theses signal connection lines, the master controller part may be configured to send control signals to the slave controller parts. Each of the slave controller parts may be configured to control the semiconductor switches 54, 38, 40, 62, 64 of the respective cell unit 24 based on the received control signal. Furthermore, the slave controller part of a cell unit 24 maybe configured to control the bypass unit 30 of the cell unit 24 based on the received control signal. In more detail, the slave controller part of the cell unit 24 may turn the semiconductor switch 54 of the bypass unit 30 either in a closed state or in an opened state based on the received control signal. As a result, the control unit 8 comprising the master control part and the plurality of slave control parts is configured to selectively bypass all cell units 24 of the converter arm 10 except for a group of cell units 24, which are preferably referred to as the remaining cell units 24 in the second charge phase, which will be discussed in a further detail in the following.

The second charge phase starts after the first charge phase is terminated. In the first charge phase each of the cell capacitors 36 of the converter arm 10 is charged to the first pre-charged level. The first charge phase may therefore also comprise of the final step of controlling the supply unit 6 by the control unit 8 to turn off the first charge voltage. But this may only be possible embodiment. It may also be a possible that the control unit 8 is configured to continue generating the first charge voltage when switching from the first charge phase to the second charge phase, for instance, if the first charge voltage and the second charge voltage refer to the same voltage. In this case, the voltage generated in the first charge phase becomes the second charge voltage in the second charge phase.

The control unit 8 is configured to control the supply unit 6 and the converter 4 during the second charge phase to perform the following steps c), d), e) and f).

In step c), the control unit 8 controls the supply unit 6 to generate the second charge voltage. As indicated before, if the second charge voltage is equal to the first charge voltage, step c) may be fulfilled by switching from the first charge phase to the second charge phase. However, in an alternative embodiment, the second charge voltage may be higher or lower than the first charge voltage. In this case, the control unit 8 controls the supply unit 6 in step c) to generate this specific second charge voltage.

The aim of steps d) and e) is to apply the second charge voltage not to at the same time all cell capacitors of 36 of the converter arm 10, but instead at the same time effectively only across a predefined number of cell capacitors 36 of the converter arm 10 to continue charging this predefined number of cell capacitors 36 each to a second pre-charged level. Once each of this predefined number of cell capacitors 36 reached the second pre-charged level, the converter 4 is controlled by the control unit 8 to effectively apply the second charge voltage only across a new predefined number of cell capacitors 36 of the converter arm 10 to continue charging this a new predefined number of cell capacitors 36 each to the second pre-charged level. The new predefined number of cell capacitors 36 is chosen from the cell capacitors 36, which have not been previously charged to the second pre-charged level.

Against this background, the control unit 8 is configured to control the converter 4 to bypass in step d) at least one of the cell units 24 of the converter arm 10, such that the remaining cell units 24, which are not bypassed, are connected in series between the first arm node 20 and the second arm node or 22 of the converter arm 10. The number of the remaining cell units 24 are at least two cell units 36. The number of the remaining cell units 24 may be less than half of the total number of cell units 24 connected in series in the converter arm 10. According to step e), the control unit 8 is also configured to electrically connect the converter arm 10 to the supply unit 6 during step d), such that the second charge voltage of step c) is applied between the first arm node 20 and the second arm node 22 resulting in a further pre-charge of the cell capacitors 36 of the remaining cell units 24 to the second pre-charged level. The cell capacitors 36 of the remaining cell unit 24 may also be referred to as the remaining cell capacitors 36. Step e) maybe performed after step d), in parallel to step d) or as an integral part of step d).

Furthermore, the control unit 8 is configured to a repeat the group of the steps d) and e), which maybe referred to a groupwise repetition. According to step f), the control unit 8 is configured to repeat the group of steps d) and e) groupwise, such that other cell units 24 of the converter arm 10 are bypassed in each step d). The other cell units 24 preferably refer to cell units 24, whose cell capacitors 24 have not been pre-charged to the second pre-charged level before. The repetition of the group of steps d) and e) is a continued until all cell capacitors are pre-charged to the second pre-charged level.

The concept of subsequently charging the cell capacitors 36 during the second charge phase to the second pre-charged level may not only a cover the embodiment, where the cell capacitors 36 of the remaining cell units 24 start to charge in parallel in step e), but also encompass an embodiment, where the start point for charging the cell capacitors 36 of the remaining cell units 24 during step e) is delayed form remaining cell unit 24 to remaining cell unit 24. This may be reached by incrementally open the semiconductor switches 54 of the group of desired remaining cell units 24. As a result, the cell capacitors 36 of the group of the remaining cell units 24 may have different start points for the beginning of the further pre-charging and different finishing points for reaching the second pre-charged level resulting in overlapping charging cycles. However, for a certain time frame, all cell capacitors 36 of the remaining cell units 24 are charged at the same time. Therefore, the concept of the second charge phase may also cover an embodiment of overlapping charging cycles for charging the cell capacitors 36 of the remaining cell units 24 to the second pre-charged level. For instance, the control unit 8 may be configured to control the bypass units 30 of the cell units 24 during step d), such that the semiconductor switches 54 of the bypass units 30 from a predefined number of the remaining cell units 24 are opened with a predefined time delay time delay so that the charging periods of the cell capacitors 36 of the remaining cell units 24 overlap. For instance, the predefined number of the remaining cell units 24 may referred to 10% to 50% of the number of the remaining cell units 24. It is to be noted, however, that step d) also covers the preferred embodiment, where all cell capacitors 36 of the remaining cell units 24 are further charged to the second pre-charged level over the same time frame, with the same starting point and the same finishing point.

As can be derived from figure 1, the supply unit 50 may comprise source input terminals 46, which may be a configured to be connected to the supply grid 56 or to another electrical voltage source. Furthermore, the supply unit 6 may comprise charging resistors 50 for limiting currents at the output terminals 48.

According to a preferred embodiment, the system 2 may be configured, such that the supply unit 6, the converter 4 and the control unit 8 are mechanically coupled to form an apparatus.

Even though the system 2 has been described previously in connection with figures 1, 2 and 3, it is to be noted, that a converter 4 of figure 1 maybe replaced by a converter 4 shown in figure 4 or 5. The converter 4 shown in figure 4 may be configured for reducing the reactive power of a commercial grid. The converter 4 shown in figure 5 may be designed to convert an AC voltage provided at the converter input terminals 12, 14, 16, 18 into a DC voltage, which is provided across the first DC terminal 72 and the second DC terminal 74 of the converter 4. The explanations, preferred features, technical effects and/or advantages discussed in a connection with the converter 4 of figure 1 preferably apply to each of the converters 4 of figures 4 and 5 in an analogous manner.

It is additionally pointed out that "comprising" does not rule out other elements, and "a" or "an" does not rule out a multiplicity. It is also pointed out that features that have been described with reference to one of the above exemplary embodiments may also be disclosed as in combination with other features of other exemplary embodiments described above. Reference signs in the claims are not to be regarded as restrictive.

### REFERENCE SIGNS

- 2: System
- 4: electrical converter
- 6: electrical supply unit
- 8: control unit
- 10: converter arm
- 12: converter input terminals
- 14: first converter input terminal
- 16: second converter input terminal
- 18: third converter input terminal
- 20: first arm node
- 22: second arm node
- 24: cell unit
- 26: first cell node
- 28: second cell node
- 30: bypass unit
- 32: first cell arm
- 34: second cell arm
- 36: cell capacitor
- 38: first semiconductor switch
- 40: second semiconductor switch
- 42: first diode
- 44: second diode
- 46: source input terminals
- 48: source output terminals
- 50: charging resistor
- 52: source switches
- 54: bypass semiconductor switch
- 56: supply grid
- 58: system switches
- 60: cell resistor
- 62: first semiconductor switch
- 64: second semiconductor switch
- 66: first diode
- 68: second diode
- 70: arm resistor
- 72: first DC terminal
- 74: second DC terminal
- 76: connection line
- 78: output switches

## Claims

1. System (2), comprising
an electrical converter (4), an electrical supply unit (6), and a control unit (8), wherein the converter (4) is coupled to the supply unit (6) and comprises a converter arm (10) and converter input terminals (12, 14, 16, 18), which are directly or indirectly connected to the converter arm (10),
wherein the converter arm (10) comprises a first arm node (20), a second arm node (*22) and a plurality of cell units (24) connected in series between the first and second arm nodes (20, 22),
wherein each cell unit (24) comprises a first cell node (26), a second cell node (28), a bypass unit (30) configured to bypass the cell unit (24) by interconnecting the cell nodes (26, 28), at least one cell arm (32, 34) and a cell capacitor (36) connected in parallel to the at least one cell arm (32, 34), wherein each cell arm (10) comprises at least two semiconductor switches (38, 40; 62, 64) connected in series,
wherein the control unit (8) is configured to control the supply unit (6) and the converter (4) during a first charge phase, such that the following steps are performed:
a) Generating a first charge voltage via the supply unit (6), and
b) Electrically connecting the converter arm (10) to the supply unit (6), such that the first charge voltage is applied between the first and second arm nodes (26, 28) resulting in a pre-charge of all cell capacitors (36) of the converter arm (10) to a first pre-charged level,
wherein the control unit (8) is configured to control the supply unit (6) and the converter (4) during a subsequent, second charge phase, such that the following steps are performed:
c) Generating a second charge voltage via the supply unit (6),
d) Bypassing at least one of the cell unit (24) of the converter arm (10), such that the remaining cell units (24), which are not bypassed, are connected in series between the first and second arm nodes (20, 22) of the converter arm (10), and
e) Electrically connecting the converter arm (10) to the supply unit (6) during step d), such that the second charge voltage is applied between the first and second arm nodes (20, 22) resulting in a further pre-charge of the cell capacitors (36) of the remaining cell units (24) to a second pre-charged level, and
f) Repeating steps d) and e) groupwise, such that other cell units (24) of the converter arm (10) are bypassed in each step d).

2. System (2) according to the preceding claim, wherein the control unit (8) is configured to control the supply unit (50) and the converter (10) during the second charge phase for performing steps d) to f) until each of the cell capacitors (36) of the cell units (24) of the converter arm (10) is pre-charged to the second pre-charged level.

3. System (2) according to one of the preceding claims, wherein the control unit (8) is configured to control the supply unit (50) and the converter (4) to disconnect the supply unit (50) from the converter (4), once and/or after all cell capacitors (36) of the cell units (24) of the converter arm (10) are pre-charged to the second pre-charged level.

4. System (2) according to one of the preceding claims, wherein the supply unit (50) comprises source input terminals (46), source output terminals (48), charging resistors (50) and source switches (52), wherein an output at the source output terminals (48) is controllable via the source switches (52), and wherein the source output terminals (48) are connected to the converter input terminals (12, 14, 16, 18).

5. System (2) according to one of the preceding claims, wherein the supply unit (50) is configured to be controlled by the control unit (8).

6. System (2) according to one of the preceding claims, wherein the control unit (8) is configured to control the supply unit (50) during step b) to output the first charge voltage at the source output terminals (48), and wherein the control unit (8) is configured to control the supply unit (50) during step e) to output the second charge voltage at the source output terminals (48).

7. System (2) according to the preceding claim, wherein the control unit (8) is configured to control the bypass units (30) of the cell units (24) during step d), such that the semiconductor switches (54) of the bypass units (30) from between 10% and 50% of all cell units (24) as remaining cell units (24) are opened with a time delay so that the charging periods of the cell capacitors (36) of the remaining cell units (24) overlap.

8. System (2) according to one of the preceding claims, wherein the converter (4) is configured to be connected to a supply grid, which provides a grid voltage, wherein the first and/or second charge voltage is smaller than the grid voltage.

9. System (2) according to one of the preceding claims, wherein the first and/or second charge voltage is smaller than 50%, 30% or 20% of the grid voltage.

10. System (2) according to one of the preceding claims 8 to 9, wherein the system comprises system switches (58) being configured to disconnect the converter (4) from the supply grid or to connect the converter (4) to the supply gird, wherein the control unit (8) is configured to control the system switches (58) to disconnect the converter (4) from the supply grid before a start of the first charge phase and/or before the supply unit (50) is electrically connected to the converter (4).

11. System (2) according to the preceding claims, wherein the control unit (8) is configured to control the system switches (58) to connect the converter (4) to the supply grid after the second charge phase and/or after the supply unit (50) is electrically disconnected from the converter (4).

12. System (2) according to one of the preceding claims 10 to 11, wherein the control unit (8) is configured to control the system switches (58), such that the converter (4) is connected to the supply grid even if the grid voltage of the supply grid is less than 0.01% of a predefined nominal grid voltage of the supply grid.

13. System (2) according to one of the preceding claims, wherein each semiconductor switch (54, 38, 40, 62, 64) of the cell units (24) is to be supplied with a predetermined switch voltage to be set to a switchable state, and wherein the first charge voltage is between one and two times of the minimum voltage determined by twice the product of the single switch voltage and the number of cell units (24) of the converter arm (10).

14. System (2) according to one of the preceding claims, wherein the bypass unit (30) of each cell unit (24) comprises a semiconductor or electromechanical switch (54) arranged between the first and second cell nodes (26, 28) of the respective cell unit (24), wherein the control unit (8) is coupled to each bypass unit (30) to control the switching states of the switches (54) of the bypass units (30).

15. System (2) according to one of the preceding claims, wherein the system (2) comprises a plurality of the converter arms (10), which are connected directly or indirectly to the converter input terminals (12, 14, 16, 18), and wherein the control unit (8) is configured to control the supply unit (50) and the converter (4) during the first charge phase to perform the steps a) and b) for each of the converter arms (10) and to control the supply unit (50) and the converter (4) during the second charge phase to perform the steps c) to f) for each of the converter arms (10).
